Europäisches Patentamt

European Patent Office

Office européen des brevets

(11) Publication number: **0 298 047**
**A2**

# EUROPEAN PATENT APPLICATION

(21) Application number: **88830243.7**

(22) Date of filing: **26.05.88**

(51) Int. Cl.⁴: **H 01 L 25/04**

(30) Priority: **05.06.87 IT 4802587**

(43) Date of publication of application:
**04.01.89 Bulletin 89/01**

(84) Designated Contracting States:
**AT BE CH DE ES FR GB GR LI LU NL SE**

(71) Applicant: **ITALSOLAR S.p.A.**
**Viale Brenta 27/29**
**I-20139 Milano (IT)**

**ROLLER CARAVAN E AUTOCARAVAN S.r.l.**
**Via Petrarca 32**
**I-50041 Calenzano (FI) (IT)**

(72) Inventor: **Petruccioli Sergio**
**Via D. Simonetti 86**
**I-00122 Rome (IT)**

**Chiapponi Fernando**
**Via Francesco Petrarca 32**
**I-50041 Calenzano (FI) (IT)**

(74) Representative: **de Simone, Domenico et al**
**Ing. Barzanò & Zanardo Roma S.p.A. Via Piemonte 26**
**I-00187 Roma (IT)**

The title of the invention has been amended (Guidelines for Examination in the EPO, A-III, 7.3).

(54) **Modular structure for supporting photovoltaic modules.**

(57) A modular structure (1) for supporting photovoltaic modules, which is particularly suitable for supplying caravans, campers and so on with electric power, said structure being made up of at least two frames (2), each at the side of the other one, with a side in common, which are realized with fiberglass-reinforced plastic or a composite material and have an open side, the three sides of each frame being so realized as to act as a guide for the insertion of corresponding photovoltaic modules (4); said structure being also made up of a closing member (5) of fiberglass-reinforced plastic or of a composite material, for closing the open side of said frames (2), so as to fasten said photovoltaic modules (4) at a given position.

EP 0 298 047 A2

## Description

### A MODULAR STRUCTURE FOR SUPPORTING PHOTOVOLTAIC MODULES, PARTICULARLY SUITABLE FOR SUPPLYING CARAVANS, CAMPERS, OR PREFABRICATED STRUCTURES WITH ELECTRIC POWER, AND IMPROVED PHOTOVOLTAIC MODULES

The present invention relates to a modular structure for supporting photovoltaic modules, said structure being particularly suitable for supplying caravans, campers, prefabricated structures with electric power, and it also relates to improved photovoltaic modules.

More particularly, the present invention relates to a structure of the type mentioned above that can be so designed as to house a different number of photovoltaic modules according to the electric power requirements of users, said structure being realized according to technologies that always allow an extremely lightweight assembly which can thus be advantageously employed in movable means.

Moreover, the present invention relates to photovoltaic modules purposely studied for that kind of exploitation, which modules have yields higher than those of the photovoltaic modules usually employed.

The exploitation of solar energy, in particular for supplying a small number of users, is an object of deeper and deeper studies.

Similarly, at the present time the need is particularly felt for succeeding in having at disposal means of transport such as caravans and the like which are energetically independent and which can thus be advantageously employed for civil protection, i.e., which can be employed in areas where the common supply of electric power is lacking.

After analyzing two such problems, the Applicants have realized a structure having all necessary characteristics, i.e., light weight, modular structure and hence flexibility as regards dimensions, easy installation, and so on, for being employed advantageously on movable means in general, and in particular on caravans for civil protection, with the exploitation of solar energy and with a sufficient autonomy to warrant power also in case of protracted black-out.

Such objects are obtained by the Applicants through the realization of a modular structure which is substantially made up of a series of frames of fiberglass-reinforced plastic or of a composite material (preferably, six frames which are opposed three by three), said frames being open at one side for the insertion of the photovoltaic modules by causing them to slide on guides obtained on the other sides of said frame, said modular structure being also made up of a closing side for locking the modules inside their own frame.

Accordingly, it is a specific object of the present invention a modular structure for supporting photovoltaic modules, in particular for supplying caravans, campers and so on with electric power, said structure consisting of at least two frames, each one arranged at the side of the other, which are provided with holes for the free circulation of air, with a side in common, said frames being realized with a fiberglass-reinforced plastic or a composite material, and having an open side, the three sides of each frame being so realized as to act as a guide for the insertion of corresponding photovoltaic modules; said structure also consisting of a closing member made up of a fiberglass-reinforced plastic or of a composite material, for closing the open side of said frames, so as to fasten the photovoltaic modules at a given position.

Preferably, in order to obtain a sufficient supply of electric power, for instance, for a caravan intended for civil protection, six frames are arranged in the structure according to the present invention, each one of said frames being placed at the side of the other, along two opposed lines, three by three.

According to the preferred embodiment of the structure of the present invention, said photovoltaic modules are made up of single-crystal silicon cells with silver system for the conveyance of electric power to the terminals.

Preferably, said photovoltaic modules are of square shape with beveled edges, such configuration allowing the ratio power/surface to be increased.

Such kind of technology, instead of that normally employed with tin system for the conveyance of electric power to terminals, causes the yield of the single cell to reach the value of 17-18 % and the yield of the whole module to reach the value of about 13 %.

For instance, a module of 640 x 640 mm size, having a thickness of 4 mm, weighs about 4 kg. Thus, the total surface will be of 0.4 m$^2$, whose 90 % consists of silicon.

With such characteristics, an electric power higher than or equal to 40 W$_p$ is obtained (which is higher than or equal to 100 W peak). If six modules are employed in the structure according to the present invention, a total weight is obtained of about 30 kg, with a power higher than or equal to 240 W$_p$. Thus, it can be seen that a structure such as that according to the present invention, which employs the improved photovoltaic modules, allows a caravan-type unit to be supplied with a largely sufficient electric power, with an extreme reduction both of weight and of dimensions.

Again according to the present invention, said structure, in particular the closing member of the same, can be provided with means for the rapid coupling with a groove arranged in the unit to be supplied, and for changing the orientation so as to obtain an optimal exposure to the sun.

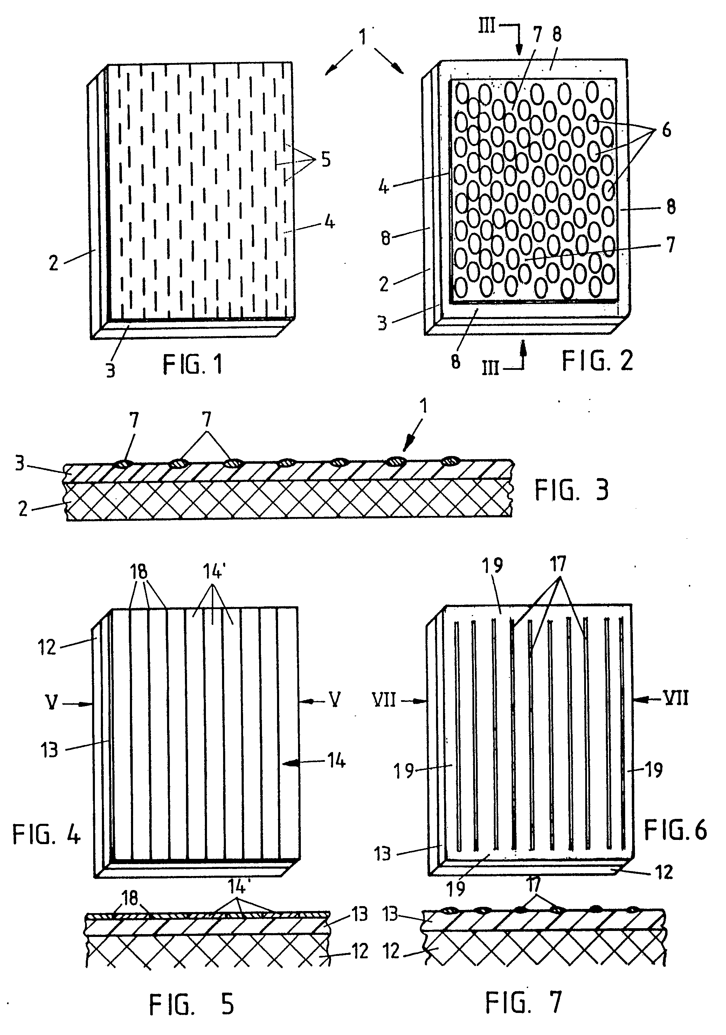

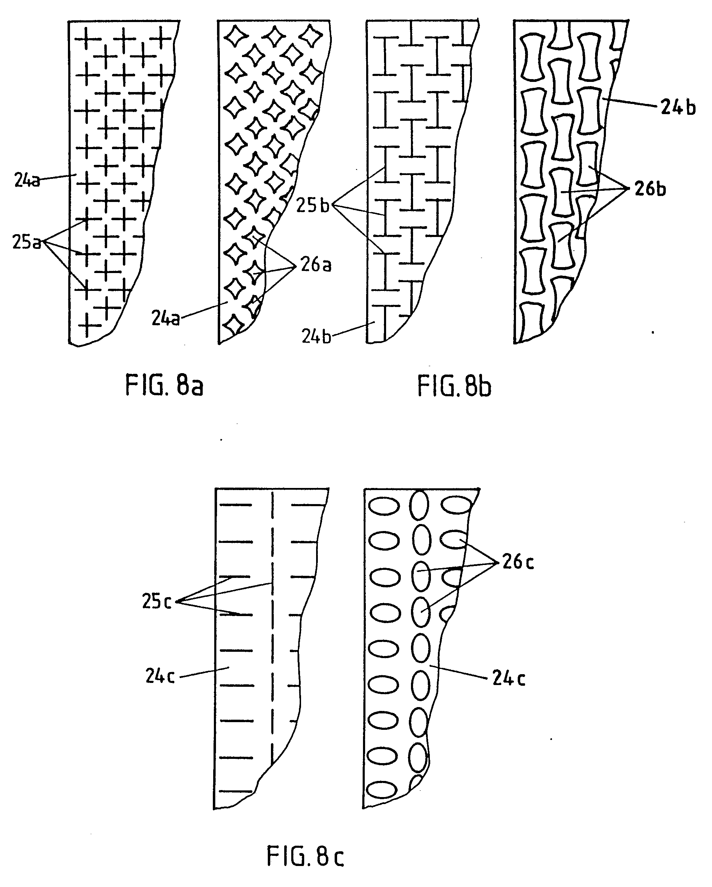

The present invention will be disclosed in the following, just for illustrative and not for limitative purposes, according to a preferred embodiment of the same as shown in the figure of the enclosed drawing, in which a perspective exploded view of the structure of the present invention is shown.

The structure 1 according to the present invention is made up of six frames 2 of a fiberglass-reinforced plastic in which the corresponding photovoltaic modules 4 are housed through insertion of the same along the arrows 3.

After inserting said modules 4, the frames 2 are closed by two closing members 5, such members being also made up of a fiberglass-reinforced plastic.

Observing the figure, it can be easily seen that the structure according to the present invention can be easily realized with a different number of frames 2 for housing the photovoltaic modules 4, as well as with different sizes of the single frames 2 themselves, according to the specific requirements of the users for which the structure itself is intended.

The present invention has been disclosed just for illustrative and not for limitative purposes, according to some preferred embodiments of the same, but it is to be understood that modifications and/or changes can be introduced in the same by those who are skilled in the art without departing from the spirit and scope of the invention for which a priority right is claimed.

## Claims

1. A modular structure for supporting photovoltaic modules, said structure being particularly suitable for supplying caravans, campers and so on with electric power and for storing such power, and being characterized in that it is made up of at least two frames, each of one of them being placed at the side of the other, and being provided with holes for the passage of air, with a side in common and realized with a fiberglass-reinforced plastic or with a composite material and having one side open, the three sides of each frame being so realized as to act as a guide for the insertion of corresponding photovoltaic modules; said modular structure being also made up of a closing member which is realized with a fiberglass-reinforced plastic or with a composite material, for closing the open side of said frames, so as to fasten the photovoltaic modules at a given position.

2. A modular structure according to claim 1, characterized in that six frames are provided which are placed at the side of one another along two opposed lines, three by three.

3. A modular structure according to claim 1, characterized in that said photovoltaic modules are made up of single-crystal silicon cells with a silver system for conveyance of electric power to the terminals.

4. A modular structure according to claim 3, characterized in that said photovoltaic modules are of square shape, with beveled edges.

5. A modular structure according to claim 3, characterized in that said photovoltaic modules are of 640 x 640 mm size and of 4 mm thickness.

6. A modular structure according to claims 1 or 2, charac terized in that said closing member is provided with means for obtaining the rapid coupling with a groove provided in the unit or the means to be supplied with power, so as to obtain a coupling that allows the variations of the orientation of the structure itself to be obtained.

0298047

FIG. 1

FIG. 2

FIG. 3

FIG. 4

FIG. 5

FIG. 6

FIG. 7

0298047

FIG. 8a

FIG. 8b

FIG. 8c